# EUROPEAN PATENT SPECIFICATION

(11) **EP 3 063 432 B1**
(45) Date of publication and mention of the grant of the patent: **11.07.2018**
(21) Application number: 14798725.9
(22) Date of filing: 29.10.2014
(51) Int. Cl.: F16G 5/16

(54) **METHOD FOR MANUFACTURING A TRANSVERSE SEGMENT FOR A PUSHBELT FOR A CONTINUOUSLY VARIABLE TRANSMISSION AND A TRANSVERSE SEGMENT THUS OBTAINED**
VERFAHREN ZUR HERSTELLUNG EINES TRANSVERSALEN SEGMENTS FÜR EIN SCHUBBAND FÜR EIN STUFENLOSES GETRIEBE UND SO ERHALTENES TRANSVERSALES SEGMENT
PROCÉDÉ DE FABRICATION D'UN SEGMENT TRANSVERSAL POUR COURROIE DE POUSSÉE POUR UNE TRANSMISSION À VARIATION CONTINUE ET SEGMENT TRANSVERSAL AINSI OBTENU

(30) Priority: 01.11.2013 NL 1040477
(43) Date of publication of application: 07.09.2016
(73) Proprietor: Robert Bosch GmbH, 70442 Stuttgart (DE)
(72) Inventor: KUNZMANN, Thomas, 75239 Eisingen (DE); PRINSEN, Lucas, Hendricus, Robertus, Maria, NL-5121 EJ Rijen (NL); MUCHE, Juergen, 75196 Remchingen (DE); MAURITSZ, Petrus, Paulus, Maria, NL-5036 SG Tilburg (NL)
(74) Representative: Plevier, Gabriel Anton Johan Maria
(86) International application number: PCT/EP2014/073192
(87) International publication number: WO 2015/063132

(56) References cited:
- EP-A1- 1 067 311
- WO-A1-2013/098401
- JP-A- 2006 043 719
- JP-U- S5 979 653
- US-A1- 2008 305 906

## Description

This disclosure relates to a method for manufacturing a transverse segment that is destined to be part of a pushbelt for a continuously variable transmission. A pushbelt for a continuously variable transmission is commonly known. Such a pushbelt usually comprises at least one, but usually two bundles of continuous bands or rings that carry a number of transverse segments. The transverse segments are movably arranged along the entire circumference of the bands and transmit forces that are related to the operation of the transmission wherein the pushbelt is provided.

In the following description of the transverse segment, the mentioned directions refer to the situation in which the transverse segment is part of the pushbelt. A longitudinal direction of the transverse segment corresponds to a circumferential direction of the pushbelt. A vertical transverse or height direction of the transverse segment corresponds to a radial direction of the pushbelt. A horizontal transverse direction or width direction of the transverse segment corresponds to a direction perpendicular to both the longitudinal direction and the vertical transverse direction. The indication of any transverse segment as subsequent transverse segment or previous transverse segment with respect to an adjacent transverse segment is related to a direction of movement of the pushbelt.

In the horizontal direction, the transverse segment is on both sides provided with openings for at least partially receiving the bundles of bands. For the purpose of supporting the bundles of bands, the transverse segment comprises carrying surfaces that are formed by the radial inside or lower boundary of the openings. For the purpose of contact between the transverse segment and pulley sheaves of a continuously variable transmission, the transverse segment is on both sides, as seen in the horizontal direction, provided with pulley sheave contact surfaces, which are divergent in the direction of the carrying surfaces.

In the vertical direction, the transverse segment comprises successively a base portion, a middle portion of which the dimensions in the horizontal direction are smaller than those of the base portion, and a top portion of which the dimensions in the horizontal direction at the location of the connection to the middle portion are larger than those of the middle portion. The basis portion comprises the carrying surfaces and the pulley sheave contact surfaces. At the pushbelt, the base portion is located at the side of the inner circumference of the pushbelt, whereas the top portion is located at the side of the outer circumference of the pushbelt. An important function of the middle portion is interconnecting the base portion and the top portion.

The transverse segment has two main body surfaces, namely a front surface and a back surface, which extend substantially parallel with respect to each other, substantially perpendicular to the longitudinal direction. At least a part of the front surface of the transverse segment is designed to abut against at least a part of the back surface of a subsequent transverse segment in the pushbelt, whereas at least a part of the back surface of the transverse segment is designed to abut against at least a part of the front surface of a previous transverse segment in the pushbelt.

In the pushbelt, two adjacent transverse segments can be rotated relative to one another about a rocking edge of one such segment, which rocking edge is usually defined at the front surface of each transverse segment and extends over the entire width of the transverse segment. Usually, the rocking edge is formed as a convexly curved area of the front surface, which area separates two portions of said front surface that are oriented at an angle relative to one other. An important function of the rocking edge is to provide the mutual contact between adjacent transverse segments that are located between the pulley sheaves of a pulley. The rocking edge is intended to arrange that the forces which are related to a movement of the pushbelt are transmitted from any transverse segment to a subsequent transverse segment in a controlled manner.

The transverse segment is typically manufactured from a strip of basic material in a known blanking process by means of a blanking device.

An example of the known blanking process is provided by the international publication WO 2013/098401 A1. In this latter process the transverse segment is cut and shaped from basic material in a number of subsequent steps. In particular, the openings for at least partially receiving the bundles of bands are punched out in two steps. Firstly, these openings are roughly shaped by punching holes in the basic material that are somewhat smaller in size than the final size of the said openings. In a later step of this known blanking process, the openings and thus also the carrying surfaces of the transverse segment are finally and accurately shaped by cutting away excess material along the edge of the punched holes.

An alternative known blanking process is described in the European publication EP 1 067 311 A1, wherein a punch and a so-called cushion or ejector are applied that are both provided with an outline essentially corresponding to the shape or contour of the transverse segment to be formed and whereof at least the ejector but typically also the punch is contained in a correspondingly shaped hole of a die and a guide plate respectively. Thus the punch, the ejector, the die and the guide plate are all component parts of the overall blanking device.

To form the transverse segment, the punch is pressed into and ultimately through the basic material under the influence of a cutting force, while the ejector also acts on the basic material and in line with the punch, however, on the opposite side of the basic material. Thus the part of the basic material that will form the transverse segment is clamped between the punch and the ejector and together these three parts move relative to the guide plate and die and the part of the basic material located between these latter two blanking device component parts.

Preferably in the known blanking process, the front surface of the transverse segment including the rocking edge is formed at the side of the ejector, whereas the back surface is formed at the side of the punch. Thus, the end surface of the ejector facing the basic material determines the shape of the front surface of the transverse segment, whereas the end surface of the punch facing the basic material determines the shape of the back surface of the transverse segment.

It is a well-known feature of the known blanking process that, at least in the aforementioned setup thereof, convexly curved transition surfaces are formed at least between the front surface of the transverse segment and a circumference surface thereof, which latter surface is newly formed, i.e. is cut out in such process. In the art these transition surfaces are also known as contraction zones or "Einzug". In the transverse segment, such a transition surface is present a/o below, i.e. radially inward of both openings between the respective carrying surfaces and the front surface of the transverse segment. As a result, the rocking edge can neither be located immediately adjacent, nor very close to the carrying surfaces. At least, the rocking edge cannot be located in the said transition surface(s), since otherwise the mutual contact between two adjacent and mutually rotated transverse segments would be unfavourably limited to only a central part of the rocking edge that lies outside the convexly curved transition surfaces below the carrying surfaces, i.e. essentially in line with the middle portion of the respective transverse segment in-between the openings thereof. Such width-wise limited and centrally located contact between the transverse segments results in high(-er) stress levels during operation, which typically increases the wear rate and/or the fatiguing of the transverse segment, as described in detail in EP-A-1 458 992.

This latter publication also teaches to apply a specifically shaped ejector in the blanking process, which ejector is shaped to urge basic material from other parts of the base portion into the said contraction zones below the carrying surfaces in order to reduce the radial extent or height thereof, i.e. of the said transition surfaces. This known blanking process should thus enables the rocking edge to be located closer to the carrying surfaces in the radial direction, while still being located outside the transition surfaces below (radially inward of) these

Inter alia, it is noted that it is generally considered a favourable and/or desirable feature in the pushbelt design that the rocking edge is located close to the carrying surfaces, so that a relative movement between the transverse segments and the bundles of bands is only minimal, whereby friction losses in the sliding contact between these two component parts of the pushbelt are minimal as well.

According to the present disclosure, the rocking edge can be located closer to the carrying surfaces in the radial direction by including the following process steps in the overall process of blanking the transverse segment from basic material:
- in one process step of the transverse segment blanking process the openings of the transverse segment are cut out only partly, while leaving a layer of basic material on top of at least each of the carrying surfaces to be formed, i.e. at the radial insides of the partly cut openings;
- thereafter, in a further one process step of the transverse segment blanking process, the layers of basic material at the radial insides of the partly cut opening are removed while forming the carrying surfaces; and
- after the said one process step thereof, but prior to the commencement of the said further one process step, a support is located in the partly formed opening, preferably closely fitting such opening.

The above process steps have the effect that a part of the transition surfaces that is located below the initially partly cut openings, is removed by and/or together with the removal of the said layers of basic material. Hence, the radial extend of these transition surfaces is reduced, at least relative to the conventional, single step transverse segment blanking process, and the rocking edge can be favourably located closer to the carrying surfaces.

Furthermore, the said layer of basic material that is to be removed from the transverse segment in the said further one process step is supported by such support. This support thus significantly limits the deformation of the said layer of basic material under the influence of a force that is exerted to remove such layer. In an advantageous elaboration of this latter embodiment, the said support is constituted by the basic material that is cut out to partly form the openings of the transverse segment in the first-mentioned one process step.

According to the present disclosure, the cutting out of other parts of the transverse segment, i.e. other than then the openings thereof, can in principle be performed simultaneous with either one or both of the above said one and further one process steps. It is, however, also possible to include a third process step for this latter purpose in the overall transverse segment blanking process. Still, in a preferred embodiment of the transverse segment blanking process according to the present disclosure, the said other parts of the transverse segment are cut out together with the removal of the said layers of basic material left on top of the carrying surfaces to be formed, i.e. as part of the said further one process step. In this case, the said layer of basic material is preferably sliced off by the die of the blanking device that determines the contour of the transverse segment in cooperation with the said punch and the said ejector thereof. Such process (step) of slicing-off of a relatively thin layer of material is widely known as shaving. Furthermore in this case, the said layer of basic material at the radial insides of the partly cut opening is preferably at least 0.1 mm and at most 0.4 mm thick. Outside such thickness range it becomes very difficult to obtain the required (surface) quality and (shape) accuracy of, in particular, the carrying surfaces. In practice such thickness range can also be expressed as a percentage range of the thickness of the basic material, namely between 5% and 25% thereof. Thus, by removing the said layer of basic material at the radial insides of the partly cut opening, the rocking edge will be located between 0.1 and 0.4 mm closer to the carrying surface as compared to the conventional transverse segment.

In a detailed embodiment of the transverse segment blanking process according to the present disclosure, a layer of basic material is left in the said one process step relative to the final shape of the opening of the transverse segment to be formed, not only on top of each of the carrying surfaces to be formed, but also on the other side of the opening. This latter approach greatly enhances the symmetry of the distribution of (cutting) forces that occur both in the said one and in the said further one process steps.

The above-described transverse segment and method for manufacturing it will now be explained further with reference to the drawing, in which equal reference signs indicate equal or similar parts and in which:
figure 1 is a schematic side view of a continuously variable transmission having a pushbelt;
figure 2 is a front view of a transverse segment for a pushbelt for a continuously variable transmission;
figure 3 is a side view of the transverse segment which is shown in figure 2;
figure 4 schematically shows a longitudinal section of a blanking area of a blanking device, and of basic material being placed in there;
figure 5 schematically illustrates the blanking process;
figure 6 is a schematic cross-section of a part of the known transverse segment, including a rocking edge and a carrying surface thereof;
figure 7 illustrates a problem associated with the locating of the rocking edge close to the carrying surface in the known transverse segment;
figure 8 illustrates a first process step of a novel manufacturing method by way of a schematic cross-section of the basic material processed therein;
figure 9 is a schematic cross-section of a part of a transverse segment obtained by a blanking process including the said first process step of the novel manufacturing method illustrated in figure 8;
figure 10 illustrates the result obtained by the said first process step of the novel manufacturing method according to the present disclosure according to a preferred embodiment thereof and by way of an overhead view of the basic material;
figure 11 illustrates an intermediate step of the said preferred embodiment of the novel manufacturing method by way of a schematic cross-section of the basic material; and
figure 12 schematically illustrates a further process step of the said preferred embodiment of the novel manufacturing method by way of a schematic cross-section of a blanking device applied therein.

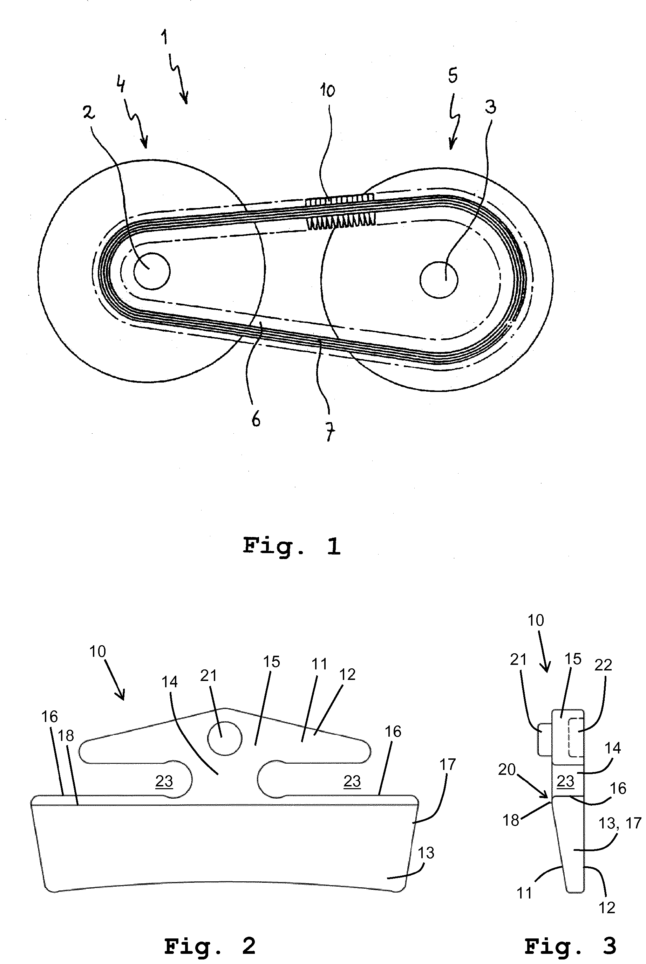

Figure 1 schematically shows a continuously variable transmission, such as for utilization in a motor vehicle. The continuously variable transmission is indicated in general by the reference sign 1.

The continuously variable transmission 1 comprises two pulleys 4, 5 being arranged on separate pulley shafts 2, 3. A pushbelt 6 is provided in a closed loop around the pulleys 4, 5 and serves for transmitting torque between the pulley shafts 2, 3. The pulleys 4, 5 are each provided with two pulley sheaves, wherein the pushbelt 6 is positioned and clamped between said two pulley sheaves, so that with the help of friction a force may be transmitted between the pulleys 4, 5 and the pushbelt 6.

The pushbelt 6 comprises two endless carriers 7 that are composed of a bundle of a number of mutually nested continuous bands. Transverse segments 10 are arranged on the carriers 7 forming an essentially contiguous row along the entire circumference thereof. The transverse segments 10 are provided movable with respect to the endless carriers 7, at least in the circumferential direction thereof. For the sake of simplicity, only a few of these transverse segments 10 are shown in figure 1.

Figures 2 and 3 show the transverse segment 10 of the known pushbelt 6 in more detail. A front surface of the transverse segment 10 is indicated in general by the reference sign 11, whereas a back surface of the transverse segment 10 is indicated in general by the reference sign 12. In the following, the front surface 11 and the back surface 12 are generally indicated as main body surfaces 11, 12.

In the vertical direction, the transverse segment 10 comprises successively a base portion 13 of predominantly trapezoidal shape, a relatively narrow middle portion 14 and a top portion 15 of predominantly triangular shape. In the pushbelt 6, the base portion 13 is located at the radially inner circumference side of the carrier 7, whereas the top portion 15 is located radially outward of the carrier 7. Furthermore, in the pushbelt 6, at least a part of the front surface 11 of the transverse segment 10 abuts against at least a part of the back surface 12 of a succeeding transverse segment 10, whereas at least a part of the back surface 12 of the transverse segment 10 abuts against at least a part of the front surface 11 of a preceding transverse segment 10.

Both to the left and the right of the middle portion 14 thereof, the transverse segment 10 defines an opening 23 that serves to receive a respective one of the endless carriers 7. These openings 23 are bound in radial inward direction by respective carrying surfaces 16 that support the endless carriers 7 in radial outward direction. Furthermore, the base portion 13 comprises two pulley sheave contact surfaces 17. When the transverse segment 10 moves over the pulley 4, 5, contact between the transverse segment 10 and contact surfaces of the pulley sheaves is established through said pulley sheave contact surfaces 17.

At the front surface 11 in the base portion 13 of the transverse segment 10, a rocking edge 18 is defined. The rocking edge 18 is represented by a convexly curved area of the front surface 11, which area separates two portions of the said front surface 11 in the height direction, which two portions are oriented at an angle relative to one other. The rocking edge 18 is located close to, but still at some distance below, i.e. radially inward of, the carrying surfaces 16. An important function of the rocking edge 18 is to provide a mutual pushing contact between the adjacent transverse segments 10, when said transverse segments 10 are in a slightly rotated or tilted position relative to one another at the pulleys 4, 5. In order to favourable realise a minimal contact stress in the said pushing contact between the said transverse segments 10 as well as for the stability of such contact, the rocking edge 18 preferably extends along the full local width of the transverse segments 10. Moreover,

Also, at the front surface 11 of the transverse segment 10, a projection 21 is provided. In the shown example, the projection 21 is arranged in the top portion 15, and corresponds in position to a slightly larger hole provided in the back surface 12. In figure 3, the hole is depicted by means of dashed lines and indicated by the reference sign 22. In the pushbelt 6, the projection 21 of the transverse segment 10 is at least partially located inside the hole 22 of an adjacent transverse segment 10. The projection 21 and the corresponding hole 22 serve to prevent or at least limit mutual displacement of adjacent transverse segments 10 in a plane perpendicular to the circumferential direction of the pushbelt 6.

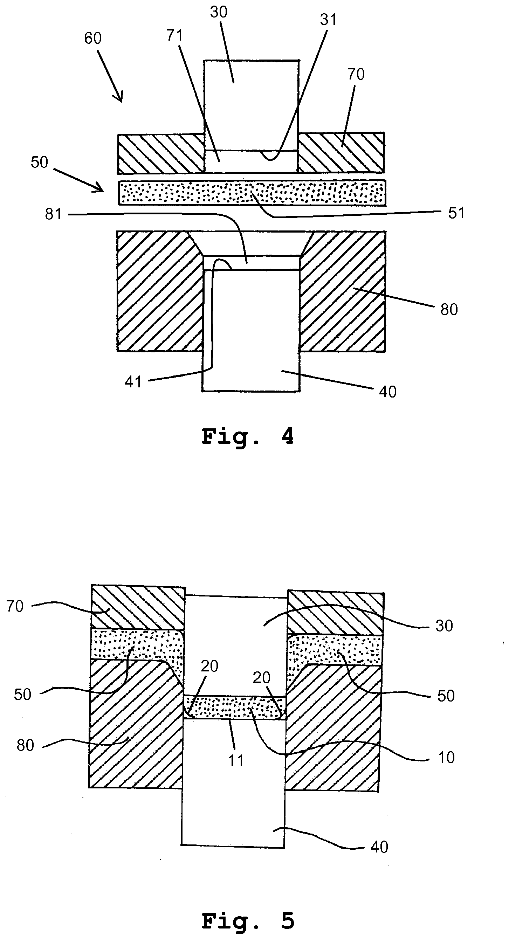

The transverse segment 10 is typically cut out of plate- or strip-shaped basic material 50 in a blanking process by means of a blanking device 60. In figures 4 and 5, the blanking device 60 and the basic material 50 are schematically illustrated in a cross-section. In the blanking device 60 a punch 30, an ejector 40, a guide plate 70 and a die 80 are applied. The guide plate 70 and the die 80 serve both to clamp the basic material 50 between them and to contain the punch 30 and the ejector 40 in respective guiding spaces 71, 81 thereof.

The part 51 of the basic material 50 that is located between the punch 30 and the ejector 40 is destined to become the transverse segment 10. During blanking the bottom or working surface 31 of the punch 30 and a top or working surface 41 of the ejector 40 are pressed against the basic material 50, at mutually opposite sides thereof, and the punch 30 and the ejector 40 are moved in unison completely through the basic material 50 in the general direction from the punch 30 to the ejector 40. As a result, the transverse segment 10 is cut out of the basic material 50 along the edges of the die 80, as illustrated in figure 5. Accordingly, the said working surfaces 31, 41 have an outline that substantially corresponds to the outer contour of the transverse segment 10.

For facilitating the cutting the said edges of the die 80 are chamfered. However, in reality, the amount of chamfering is much less than what is shown in figure 5 for clarity. For example, typically, the depth of the chamfering amounts to approximately one tenth of the thickness of the basic material 50.

During blanking the front surface 11 of the transverse segment 10, including the rocking edge 18, is shaped by the working surface 41 of the ejector 40 and the back surface 12 of the transverse segment 10 is shaped by the working surface 31 of the punch 30. This particular arrangement of the punch 30 and of the ejector 40 may, however, be reversed.

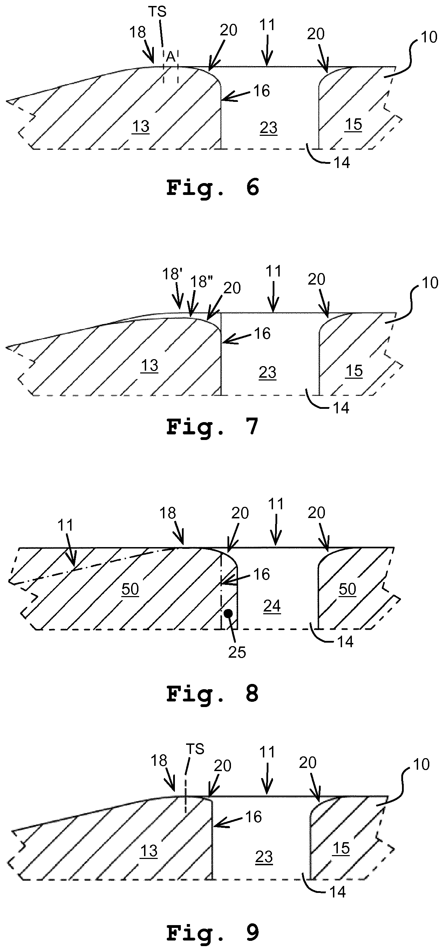

It is a well-known feature of the above-described blanking process that, at least in the aforementioned setup thereof, convexly curved transition surfaces 20 are formed between the front surface 11 and the circumference surfaces of the transverse segment 10, which circumference surfaces includes the pulley sheave contact surfaces 17 and the carrying surfaces 16 thereof. These transition surfaces 20 are also known as contraction zones or "Einzug" areas in the art. In the transverse segment 10 such a contraction zone or transition surface 20 is a/o present below, i.e. radially inward of both openings 23 between the respective carrying surfaces 16 and the front surface 11 of the transverse segment 10, as schematically indicated in figure 6.

In figure 6 the known design of the transverse segment 10 is schematically reproduced by way of a cross-section of a part thereof including the rocking edge 18, one of the carrying surfaces 16 of the transverse segment 10 and the transition surface 20 between such carrying surface 16 and the front surface 11 of the transverse segment 10. In figure 6, as well as in subsequent figures of the transverse segment 10, the convex curvature of the rocking edge 18 has been exaggerated to be able to discern the convex shape thereof on the scale of this figure. Also the size of the contraction zone 20 has been exaggerated for such purpose in the figures.

At the location of the two transition surfaces 20 that are formed between the carrying surfaces 16 and the front surface 11 of the transverse segment 10, the local transverse segment 20 thickness is less than in-between these two transition surfaces 20, i.e. in line with but below the middle portion 14. It is normal design practice to locate the rocking edge 18 outside these two transition surfaces 20, such that a top side "TS" of the rocking edge 18 is separated by some distance "A" there from, which distance "A", however, is preferably chosen as small as can be reliably produced in order to optimise the efficiency of the pushbelt 6 during operation.

Otherwise, i.e. if the rocking edge 18 intersects with the said two contraction zones 20, the convex curvature of the rocking edge 18 will merge with the convex curvature of the transition surfaces 20, as schematically illustrated in figure 7. In this latter design the rocking edge 18 would split into three parts, whereof two parts 18', 18" are visible in figure 7 and whereof only a central part 18' that is located in line with the middle portion 14 of the transverse segment 10 will normally arrive in the said pushing contact with a preceding transverse segment 10 in the pushbelt 6, because the transverse segment 10 is thickest in such central part 18' of the rocking edge 18; 18', 18". However, such width wise limited pushing contact is known to be detrimental to the operation and the durability of the pushbelt 6 and is thus mostly avoided in practice. In fact, in practice, the top side "TS" of the rocking edge 18 is typically located at around 1 mm below the carrying surfaces 16 of the transverse segment 10, as a result whereof the rocking edge 18 is surely located outside, i.e. radially inward of the transition surfaces 20. It is noted that the above-mentioned distance/radial separation value of 1 mm is intended as an example only. In practice such radial separation can depends on several process parameters such as the thickness of the basic material 50, material properties thereof and even the setup of the blanking device and blanking process as such.

From the above it is clear that, if the radial extend of the transition surfaces 20 could be reduced, the rocking edge 18 could be favourably located high on the transverse segment 10 and closer to the carrying surfaces 16 (i.e. more towards the right in figure 6). According to the present disclosure, this is exactly what can be achieved by including the following two consecutive process steps in the overall process of blanking the transverse segment 10 from the basic material 50.

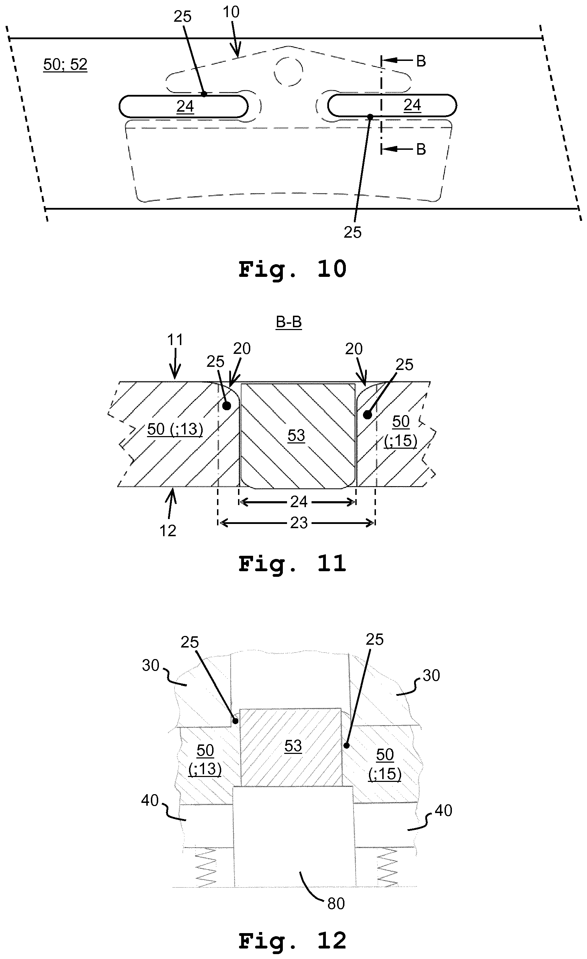

In one process step of such novel manufacturing method, the result whereof is illustrated in figure 8 by way of a schematic cross-section of the basic material 50, holes 24 are cut in the basic material 50, which holes 24 largely correspond with the openings 23 of the transverse segment 20 to be formed, however, with the exception of at least a layer 25 of the basic material 50 that is left at the radial insides of the holes 24, i.e. on top of each of the carrying surfaces 16 to be formed. In the intermediate state of forming the transverse segment 10 that is represented in figure 8, the carrying surfaces 16 thereof are thus still to be formed, as is its rocking edge 18. This latter, final shape of the transverse segment 10 is indicated in figure 11 by the dash-dot-lines.

After the said one process step, in a further one process step of the novel manufacturing method, the result whereof is illustrated in figure 9 by way of a schematic cross-section of the finally formed transverse segment 10, the layers 25 of the basic material 50 that are left at the radial inside of the respective openings 23 to be formed are removed, whereby also the carrying surfaces 16 are formed. By this removal of the said layers 25 of the basic material 50, also a part of the transition surfaces 20 formed in the said one process step are removed. As can been seen in figure 9 and as a result of the removal of the said layers 25 of the basic material 50, the transition surface 20 no longer smoothly merges with the carrying surface 16. Instead the transition surface 20 is oriented at an acute angle relative to the carrying surface 16. In practice, the thus formed transverse segment 10 is normally subjected to a deburring process such as stone tumbling, as a result whereof edges of the transverse segment 10 between the said main body surfaces 11, 12 and the circumference surface thereof, i.e. including the said acute angle between the transition surface 20 and the carrying surface 16, are rounded-off to a certain extent. In the final product, i.e. in the transverse segment 10 as applied in the drive belt 6, the said acute angle will thus be replaced by a relatively sharp convex curvature that will normally remain inside an (virtual) arc of radius 0.4 mm or less, typically of around 0.2-0.3 mm.

Further in this further one process step the rocking edge 18 has been formed as well for the sake of illustration. Still the rocking edge 18 may in principle also be formed independently from the further one process step.

As a result of the above-described novel manufacturing method, the top side "TS" of the rocking edge 18 is positioned favourably close(-er) to the carrying surfaces 16, while still being located outside, i.e. below the transition surfaces 20 between these carrying surfaces 16 and the front main surface 11 of the transverse segment 10.

Hereinafter, the said novel manufacturing method will be described in more detail along a preferred embodiment thereof and with reference to the drawing figures 10-13.

Figure 10 provides an overhead view of a strip 52 of the basic material 50, wherein the above-mentioned holes 24 are already formed by means of the known blanking process illustrated in the figures 4 and 5 hereof, i.e. wherein the said one process step is already completed. In this figure 10 the contour of the transverse segment 10 that will be formed, i.e. cut, only in a later stage of the presently described, preferred embodiment of the novel manufacturing method is indicated by the dashed lines. On close inspection it can be discerned in the example of figure 11 that, by the application of the hole 24, a thin layer 25 of the basic material 50 is left both along the bottom side and top side thereof relative to the size and shape of the opening 23 of the transverse segment 10 to be formed later, i.e. relative to the final shape of the body and head parts 13, 15 thereof. Although this latter aspect of the presently described, preferred embodiment of the novel manufacturing method is not an absolute necessity, it does normally improve the accuracy of the said further one process step of cutting out the final shape of the opening 23 of the transverse segment 10, by equalising the cutting force exerted on/by either side of the die 80 of the blanking device, as will be apparent from figure 12 hereinafter.

In an intermediate step of the presently described, preferred embodiment of the novel manufacturing method, the bar-shaped pieces 53 of the basic material 50 that were removed from the strip 52 of the basic material 50 to form the said holes 24, are re-inserted into these respective holes 24. The result of this intermediate process step is illustrated in figure 11 in a schematic cross-section of the strip 52 of the basic material 50 and of the said pieces 53 of the basic material 50. In figure 11 the final size of the opening 23 of the transverse segment 10 to be formed is indicated by the dash-dot-lines, thus showing the layers 25 of the basic material 50 that are left on both sides of the hole 24 for later removal.

In figure 12 the said further one process step of cutting out the final shape of the opening 23 of the transverse segment 10 is schematically illustrated. As illustrated in figure 12, the said openings 23 of the transverse segment 10 are finally formed by moving a punch 30 and an ejector 40 of a blanking device, where between the transverse segment 10 (as show in part in figure 12 by its body part 13 and head part 15) to be formed is held, towards a die 80 of the blanking device. The die 80 is shaped, in part, in accordance with the openings 23 of the transverse segment 10, such that -by the said movement of the punch 20 and the ejector 30- it scrapes or slices off the said layers 25 of the basic material 50 that were left on both sides of the hole 24 relative to such opening 23. At the same time the said piece 53 of the basic material 50, which piece 53 was (re-) inserted in the hole 24, supports the yet uncut, i.e. unsliced, parts of the said layers 25 of the basic material 50 and thus reduces a deformation of the basic material 50 in front of the die 80 in response to the cutting forces exerted thereby. Simultaneously with such removal of the said layers 25 of the basic material 50 also the rest of the contour of the transverse segment 10 is formed, i.e. is cut from, the strip 52 of the basic material 50.

As mentioned hereinabove, by the slicing off of the said layers 25 of the basic material 50 that were left on both sides of the holes 24 relative to the openings 23 of the transverse segment 10 to be finally formed, also a part of the transition surfaces 20 between the carrying surfaces 16, which carrying surface 16 are defined by the radial inside surfaces of the openings 23 and the front face of the transverse segment 10 provided with the rocking edge 18, are removed. As a result, a radial distance between this rocking edge 18, which rocking edge 18 that is located radially inward of the transition surfaces 20, and the carrying surface 16 is favourably reduced.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. A method for cutting a transverse segment (10) out of basic material (50) in a blanking process for a pushbelt (6) with two ring shaped carriers (7) and with a number of consecutive transverse segments (10) provided movable on the carriers (7), which transverse segment (10), on either axial side thereof is provided with openings (23) for accommodating the carriers (7), which openings (23) are delimited in inward direction by respective carrying surfaces (16) of a base portion (13) of the transverse segment (10), which base portion (13) also comprises a rocking edge (18) in the form of a convexly curved surface part thereof that extends in the axial direction, wherein
- in a first process step of the cutting method, holes (24) are formed in the basic material (50) at the location of the openings (23) of the transverse segment (10) to be formed later, while leaving a layer (25) of the basic material (50) between the carrying surfaces (16) of the transverse segment (10) to be formed later and a side surface of the holes (24), and
- subsequently, in a following process step of the cutting method, the said layer (25) of the basic material (50) is removed, **characterized in that** in a further, in-between process step thereof, carried out between the said first process step and the said following process step thereof, a support (53) is positioned in each hole (24), preferably completely filling such holes (24).

2. The cutting method according to claim 1, **characterised in that**, in the said following process step of the cutting method, the transverse segment (10) is cut from the basic material (50), i.e. the complete contour thereof is cut out.

3. The cutting method according to claim 1 or 2, **characterised in that**, the support (53) is a piece of basic material (53) that are removed from the basic material (50) in the said first process step of the cutting method to form a respective one of the holes (24).

4. The cutting method according to any one of the claims 1-3, **characterised in that**, in the said first process step of the cutting method also a layer (25) of the basic material (50) is left between
a further side surface of the holes (24) and a top portion (15) of the transverse segment (10) to be formed later.

5. The cutting method according to any one of the claims 1-4, **characterised in that**, the said layer (25) of the basic material (50) has a thickness of between 0.1 mm and 0.4 mm.

6. The cutting method according to any one of the claims 1-5, **characterised in that**, after the transverse segment (10) is cut from the basic material (50) in the said following process step thereof, the contour edge of the transverse segment (10) is subjected to a process step of deburring, such as tumbling.

## Patentansprüche

1. Verfahren zum Ausschneiden eines transversalen Segments (10) aus einem Ausgangsmaterial (50) in einem Ausstanzprozess für ein Schubband (6) mit zwei ringförmigen Trägern (7) und mit einer Anzahl von aufeinander folgenden transversalen Segmenten (10), die auf bewegbare Weise auf den Trägern (7) vorgesehen sind, wobei das transversale Segment (10) auf jeder axialen Seite desselben mit Öffnungen (23) zum Unterbringen der Träger (7) versehen ist, wobei die Öffnungen (23) in einer nach innen verlaufenden Richtung durch entsprechende tragende Flächen (16) eines Basisabschnitts (13) des transversalen Segments (10) begrenzt sind, wobei der Basisabschnitt (13) außerdem eine Schwingkante (18) in Form eines konvex gekrümmten Flächenteils desselben umfasst, der sich in axialer Richtung erstreckt, wobei
- in einem ersten Prozessschritt des Schneidverfahrens Löcher (24) in dem Ausgangsmaterial (50) an dem Ort der Öffnungen (23) des später auszubildenden transversalen Segments (10) ausgebildet werden, während eine Schicht (25) des Ausgangsmaterials (50) zwischen den tragenden Flächen (16) des später auszubildenden transversalen Segments (10) und einer Seitenfläche der Löcher (24) gelassen wird, und
- in einem folgenden Prozessschritt des Schneidverfahrens die Schicht (25) des Ausgangsmaterials (50) anschließend entfernt wird, **dadurch gekennzeichnet, dass** in einem weiteren Prozesszwischenschritt desselben, der zwischen dem ersten Prozessschritt und dem folgenden Prozessschritt desselben durchgeführt wird, eine Stützvorrichtung (53) in jedem Loch (24) positioniert wird, die vorzugsweise derartige Löcher (24) vollständig ausfüllt.

2. Schneidverfahren nach Anspruch 1, **dadurch gekennzeichnet, dass** in dem folgenden Prozessschritt des Schneidverfahrens das transversale Segment (10) aus dem Ausgangsmaterial (50) ausgeschnitten wird, d.h. dass die gesamte Kontur desselben ausgeschnitten wird.

3. Schneidverfahren nach Anspruch 1 oder 2, **dadurch gekennzeichnet, dass** es sich bei der Stützvorrichtung (53) um ein Stück des Ausgangsmaterials (53) handelt, das in dem ersten Prozessschritt des Schneidverfahrens aus dem Ausgangsmaterial (50) entfernt wird, um ein entsprechendes der Löcher (24) auszubilden.

4. Schneidverfahren nach einem der Ansprüche 1 bis 3, **dadurch gekennzeichnet, dass** in dem ersten Prozessschritt des Schneidverfahrens außerdem eine Schicht (25) des Ausgangsmaterials (50) zwischen einer weiteren Seitenfläche der Löcher (24) und einem oberen Abschnitt (15) des später auszubildenden transversalen Segments (10) gelassen wird.

5. Schneidverfahren nach einem der Ansprüche 1 bis 4, **dadurch gekennzeichnet, dass** die Schicht (25) des Ausgangsmaterials (50) eine Dicke zwischen 0,1 mm und 0,4 mm aufweist.

6. Schneidverfahren nach einem der Ansprüche 1 bis 5, **dadurch gekennzeichnet, dass**, nachdem das transversale Segment (10) in dem folgenden Prozessschritt desselben aus dem Ausgangsmaterial (50) ausgeschnitten worden ist, die Konturkante des transversalen Segments (10) einem Prozessschritt des Entgratens, wie zum Beispiel Scheuern, unterzogen wird.

## Revendications

1. Procédé pour découper un segment transversal (10) dans un matériau de base (50) dans un processus d'ébauchage pour une courroie de poussée (6) avec deux transporteurs annulaires (7) et avec un certain nombre de segments transversaux consécutifs (10) fournis mobiles sur les transporteurs (7), ledit segment transversal (10) étant muni des deux côtés axiaux de celui-ci d'ouvertures (23) pour recevoir les transporteurs (7), lesdites ouvertures (23) étant délimitées dans la direction vers l'intérieur par des surfaces porteuses (16) respectives d'une portion de base (13) du segment transversal (10), ladite portion de base (13) comprenant également un bord basculant (18) sous la forme d'une partie de surface à courbure convexe de celle-ci qui s'étend dans la direction axiale, dans lequel
- dans une première étape de processus du procédé de découpe, des trous (24) sont formés dans le matériau de base (50) à l'endroit des ouvertures (23) du segment transversal (10) à former ultérieurement, tout en laissant une couche (25) du matériau de base (50) entre les surfaces porteuses (16) du segment traversant (10) à former ultérieurement et une surface latérale des trous (24), et
- ensuite, dans une étape de processus suivante du procédé de découpe, ladite couche (25) du matériau de base (50) est retirée,
**caractérisé en ce que**, dans une autre étape de processus intermédiaire de celui-ci, exécutée entre ladite première étape de processus et ladite étape de processus suivante de celui-ci, un support (53) est positionné dans chaque trou (24), remplissant ces trous (24) de préférence entièrement.

2. Procédé de découpe selon la revendication 1, **caractérisé en ce que**, dans ladite étape de processus suivante du procédé de découpe, le segment transversal (10) est découpé dans le matériau de base (50), c'est-à-dire son contour complet est découpé.

3. Procédé de découpe selon la revendication 1 ou 2, **caractérisé en ce que** le support (53) est un morceau de matériau de base (53) qui est retiré du matériau de base (50) dans ladite première étape de processus du procédé de découpe pour former un trou respectif des trous (24).

4. Procédé de découpe selon l'une quelconque des revendications 1 à 3, **caractérisé en ce que**, dans la première étape de processus du procédé de découpe, une couche (25) du matériau de base (50) est également laissée entre une autre surface latérale des trous (24) et une portion supérieure (15) du segment transversal (10) à former ultérieurement.

5. Procédé de découpe selon l'une quelconque des revendications 1 à 4, **caractérisé en ce que** ladite couche (25) du matériau de base (50) présente une épaisseur entre 0,1 mm et 0,4 mm.

6. Procédé de découpe selon l'une quelconque des revendications 1 à 5, **caractérisé en ce que** le segment transversal (10) est découpé dans le matériau de base (50) dans ladite étape de processus suivante de celui-ci, le bord de contour du segment transversal (10) étant soumis à une étape de processus d'ébavurage, telle que le dessablage.
